# EUROPEAN PATENT APPLICATION

(11) **EP 4 685 575 A1**
(43) Date of publication of application: **28.01.2026**
(21) Application number: 25190973.5
(22) Date of filing: 22.07.2025
(51) Int. Cl.: G03G 21/16, G03G 21/20

(54) **IMAGE FORMING APPARATUS**

(30) Priority: 23.07.2024 JP 2024117800
(71) Applicant: Canon Kabushiki Kaisha, Tokyo, 146-8501 (JP)
(72) Inventor: TSUJI, Hiroharu, Tokyo, 146-8501 (JP)
(74) Representative: TBK

(57) **Abstract**

An image forming apparatus includes an airflow generator (90), a motor (20), a body housing including an apparatus body (20a) that supports the motor, and an opening/closing body (20b) that is openable and closable and supports the airflow generator (90), the opening/closing body (20b) including: a storage portion that accommodates the airflow generator (90), a cover portion that covers a part of the airflow generator (90) stored in the storage portion, an suction port communicating with the storage portion, and an exhaustion port communicating with the storage portion. In a case where the air flow generator (90) is driven by the motor in a state where the opening/closing body (20b) is closed with respect to the apparatus body, air is drawn into the storage portion from the outside of the body housing through the suction port, and the air is exhausted from the exhaustion port into the body housing.

## Description

### TECHNICAL FIELD

The present disclosure relates to an image forming apparatus.

### BACKGROUND

Conventionally, a configuration known as an image forming apparatus is provided with air flow generating means such as an air blower that draws air from the outside of a housing constituting the exterior of the image forming apparatus and generates an air flow for feeding air into the housing.

Japanese Patent No. 6658618 discloses a configuration including an apparatus body, an opening/closing body that is openable and closable with respect to the apparatus body, and an axial fan that is attached to the opening/closing body and serves as air flow generating means. Japanese Patent Application Publication No. 2022-99819 discloses a configuration in which a cross-flow fan extended in the width direction of a recording medium is provided as air flow generating means in an apparatus body.

### SUMMARY

The present disclosure is directed to further develop conventional technology.

The present disclosure in its first aspect provides an image forming apparatus as specified in claim 1. Optional features are specified in claim 2 to 15.

According to an aspect of the present disclosure, conventional technology can be further developed.

Features of the present disclosure will become apparent from the following description of embodiments with reference to the attached drawings. The following description of embodiments is described by way of example.

### BRIEF DESCRIPTION OF THE DRAWINGS

FIG. 1 is a schematic cross-sectional view of an image forming apparatus according to a first embodiment;
FIGS. 2A and 2B are schematic cross-sectional views when the door of the image forming apparatus is opened according to the first embodiment, FIG. 2A shows a state where the opening/closing tray is opened, and Fig. 2B shows a state where the opening/closing body is opened;
FIG. 3 is a perspective view showing an airflow generator according to the first embodiment;
FIGS. 4A and 4B are explanatory drawings of the airflow generator according to the first embodiment, Fig. 4A is a perspective view showing the airflow generator and a cover member, and Fig. 4B is a cross-sectional view showing the airflow generator and a housing portion that accommodates the airflow generator, and showing a cross section orthogonal to the width direction;
FIGS. 5A and 5B are perspective views showing the image forming apparatus according to the first embodiment, FIG. 5A shows a state where the opening/closing tray is opened, and FIG. 5B shows a state where the opening/closing tray is closed;
FIG. 6 is a perspective view illustrating a part of a door member according to the first embodiment;
FIGS. 7A and 7B are explanatory drawings of air flows according to the first embodiment, FIG. 7A is a cross-sectional view showing the periphery of the airflow generator, the fixing portion, and the discharge reversal portion, and FIG. 7B shows the flapper and a branch conveying guide that are viewed from the front side;
FIG. 8 shows the driving configuration of the airflow generator according to the first embodiment;
FIG. 9 is a perspective view showing an airflow generator according to a second embodiment; and
FIGS. 10A and 10B are explanatory drawings of the airflow generator according to the second embodiment, FIG. 10A is a perspective view showing the airflow generator and a cover member, and FIG. 10B is a cross-sectional view of the airflow generator and a storage portion that accommodates the airflow generator.

### DESCRIPTION OF THE EMBODIMENTS

Hereinafter, a description will be given, with reference to the drawings, of various exemplary embodiments (examples), features, and aspects of the present disclosure. However, the sizes, materials, shapes, their relative arrangements, or the like of constituents described in the embodiments may be appropriately changed according to the configurations, various conditions, or the like of apparatuses to which the disclosure is applied. Therefore, the sizes, materials, shapes, their relative arrangements, or the like of the constituents described in the embodiments do not intend to limit the scope of the disclosure to the following embodiments.

In the following description, embodiments are implemented by applying the present invention to an image forming apparatus of an electrophotographic image forming system for forming an image on a recording medium using an electrophotographic image forming process. Image forming apparatuses of the electrophotographic image forming system include, for example, an electrophotographic copying machine, an electrophotographic printer (e.g., an LED printer, a laser beam printer), and an electrophotographic facsimile.

### First Embodiment

A first embodiment according to the present invention will be described below. A printer 1 according to the first embodiment is an electrophotographic color laser-beam printer that forms an image on a sheet S serving as a recording material.

### Printer

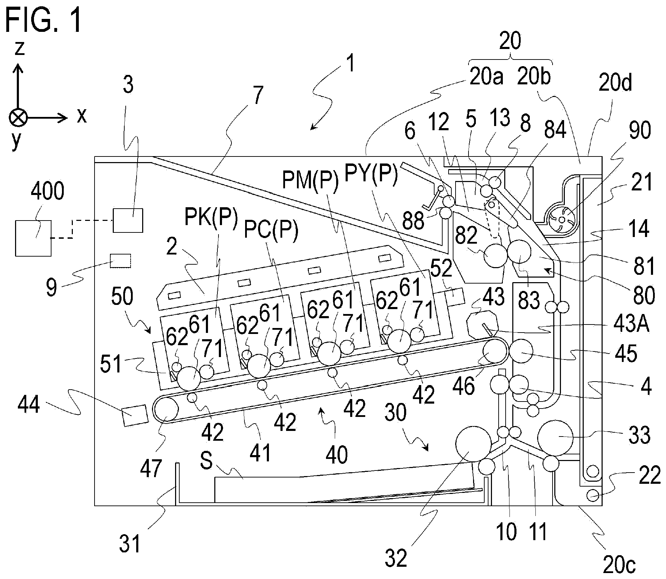

Referring to FIG. 1, the configuration of the printer 1 will be described below. FIG. 1 is a schematic cross-sectional view showing the overall configuration of the printer 1 according to the first embodiment. In the following description and drawings, the longitudinal direction of the printer 1 is assumed to be the x direction, the width direction is assumed to be the y direction, and the vertical direction is assumed to be the z direction. In FIG. 1, the x direction is the lateral direction in the drawing, the y direction is the depth direction of the drawing, and the z direction is the vertical direction of the drawing. The front side of the printer 1 is the right side of FIG. 1, and the back side is the left side of FIG. 1.

The printer 1 has a body housing 20 including an apparatus body 20a and an opening/closing body 20b that is openable and closable with respect to the apparatus body 20a. Furthermore, the printer 1 includes a scanner 2, a control portion 3, a sheet feeding portion 30, a transfer unit 40, a cartridge unit 50, and a fixing apparatus 80. These units are stored in the apparatus body 20a.

An opening communicating with the outside and inside of the apparatus body 20a is formed at the front-side end of the apparatus body 20a. The opening/closing body 20b is an opening/closing door that is openable and closable with respect to the opening of the apparatus body 20a. The opening/closing body 20b is configured to pivot between an open position where the opening of the apparatus body 20a is opened and a closed position where the opening is closed, around a swing support shaft 22 attached to the lower part of the apparatus body 20a.

The sheet feeding portion 30 includes a cassette 31 where a sheet S as a recording medium (recording material) is loaded, and a first feed roller 32 that feeds the sheet S loaded in the cassette 31. The cassette 31 is configured to be drawn to the front side (the side where the opening/closing body 20b is provided) with respect to the apparatus body 20a. Since the cassette 31 is configured to be insertable and removable in the longitudinal direction of the printer 1, a user can pull out the cassette 31 to add the sheet S.

In the body housing 20, a conveying path for conveyance of the sheet S fed from the sheet feeding portion 30 is formed, and the sheet S is conveyed in the conveying path by a plurality of conveying rollers. In the present embodiment, the conveying path includes a first conveying path 10, a second conveying path 11, a third conveying path 12, a fourth conveying path 13, and a fifth conveying path 14. The direction of the rotation axis of the conveying roller is parallel to the width direction (y direction) of the printer 1.

The cartridge unit 50 includes a tray 51 and cartridges PY, PM, PC, and PK. The tray 51 is provided with a tray handle 52 on the front side in the longitudinal direction. The cartridges PY, PM, PC, and PK are developer storage portions that are removably attached to the tray 51 and contain toner as a developer.

The cartridges PY, PM, PC, and PK are independently attachable to and detachable from the tray 51. The cartridge PY contains yellow (Y) toner, the cartridge PM contains magenta (M) toner, the cartridge PC contains the desired (C) toner, and the cartridge PK contains black (K) toner. The cartridges PY, PM, PC, and PK have the same configuration except for different colors of stored toner. Thus, in the following description, the configuration and operation of any one of the cartridges PY, PM, PC, and PK will be discussed and the description of other cartridges may be omitted. Also, in a case where the cartridges PY, PM, PC, and PK do not need to be distinguished from one another, the cartridges PY, PM, PC, and PK may be simply referred to as cartridge P.

The cartridge unit 50 includes four photosensitive drums (image bearing members) 61, four charging rollers (charging members) 62, and four developing rollers (developer carrying members) 71. In a state where the cartridge unit 50 is attached to the apparatus body 20a, the direction of the rotation axis of the photosensitive drum 61, the direction of the rotation axis of the developing roller 71, and the direction of the rotation axis of the charging roller 62 are parallel to the width direction (y direction) of the printer 1.

A portion for forming a black (K) image is called a black station (first station), the photosensitive drum 61 of the first station is called a first photosensitive drum, the developing roller 71 is called a first developing roller, and the charging roller 62 is called a first charging roller.

A portion for forming a cyan (C) image is called a cyan station (second station), the photosensitive drum 61 of the second station is called a second photosensitive drum, the developing roller 71 is called a second developing roller, and the charging roller 62 is called a second charging roller.

A portion for forming a magenta (M) image is called a magenta station (third station), the photosensitive drum 61 of the third station is called a third photosensitive drum, the developing roller 71 is called a third developing roller, and the charging roller 62 is called a third charging roller.

A portion for forming a yellow (Y) image is called a yellow station (fourth station), the photosensitive drum 61 of the fourth station is called a fourth photosensitive drum, the developing roller 71 is called a fourth developing roller, and the charging roller 62 is called a fourth charging roller.

Note that the photosensitive drum 61, the charging roller 62, and the developing roller 71 may be provided in either the cartridge P or the tray 51. In the present embodiment, the cartridge P includes the photosensitive drum 61, the charging roller 62, and the developing roller 71.

The transfer unit 40 includes a belt 41, a primary transfer roller 42, a cleaning portion 43, a driver roller 46 for driving the belt 41, and a tension roller (driven roller) 47. Furthermore, the printer 1 of the present embodiment is provided with an optical sensor 44 for detecting a toner image transferred to the belt 41. In the present embodiment, the belt 41 is disposed below the photosensitive drums 61 and can be in contact with the photosensitive drum 61 such that a primary transfer portion (primary transfer nip) is formed. The printer 1 further includes a secondary transfer roller 45 in contact with the belt 41 such that a secondary transfer portion (secondary transfer nip) is formed. The direction of the rotation axis of the primary transfer roller 42, the direction of the rotation axis of the driver roller 46, the direction of the rotation axis of the tension roller 47, and the direction of the rotation axis of the secondary transfer roller 45 are parallel to the width direction (y direction) of the printer 1. A registration roller pair 4 is disposed in front of the secondary transfer portion.

The fixing apparatus 80 includes a fixing portion 81 and a discharge reversal portion 5. The fixing apparatus 80 is configured to press and heat the sheet S in the use position. In the present embodiment, the fixing portion 81 is a heating device including a heating portion (heat roller) 82 including a heater and a pressure portion (pressure roller) 83. The fixing apparatus 80 is provided on the front side and the upper side of the apparatus body 20a.

The opening/closing body 20b has a first end 20c on the proximal end side at the time of pivoting and a second end 20d on the distal end side opposite to the first end 20c in a direction orthogonal to the pivot axis (an axis extending in the y direction). The swing support shaft 22 is disposed closer to the first end 20c than to the second end 20d. In a case where the opening/closing body 20b is in the closed position, the second end 20d is located at the upper end of the printer 1.

An airflow generator 90 is provided inside the opening/closing body 20b. The airflow generator 90 is attached at a position closer to the second end 20d than to the first end 20c of the opening/closing body 20b. In a case where the opening/closing body 20b is in the closed position, the airflow generator 90 is located above the swing support shaft 22 and on the upper end side of the printer 1. Accordingly, in a case where the opening/closing body 20b is in the closed position, the airflow generator 90 is disposed near the fixing apparatus 80.

The printer 1 further includes an environment sensor 9. The environment sensor 9 can detect the temperature and humidity of the environment where the printer 1 is installed.

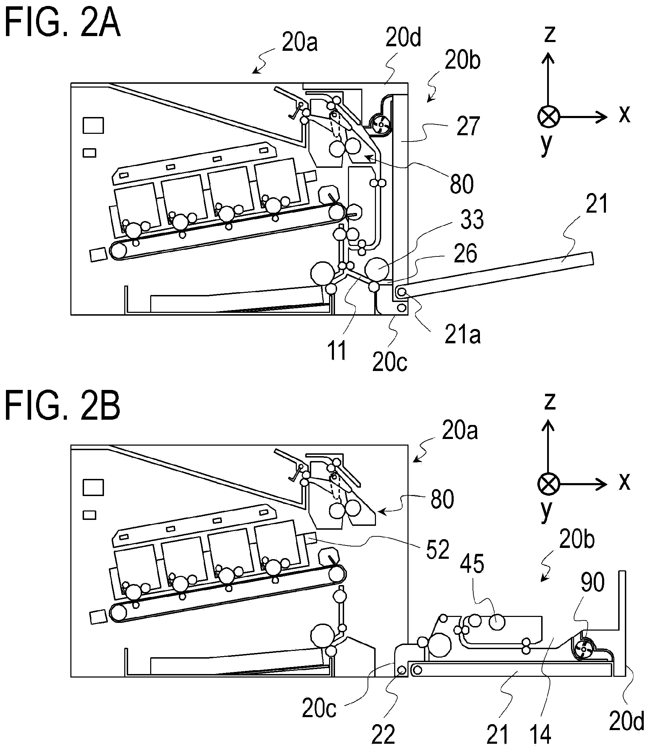

FIGS. 2A and 2B are schematic cross-sectional views when the opening/closing member of the printer 1 is opened. The opening/closing body 20b has an opening/closing tray 21 that can be opened and closed to an opening/closing main body 27 of the opening/closing body 20b. That is, the opening/closing body 20b is composed of the opening/closing main body 27 that is a first opening/closing cover to be openable and closable with respect to the apparatus body 20a, and an opening/closing tray 21 that is a second opening/closing cover to be openable and closable with respect to the opening/closing main body 27. FIG. 2A shows a state where the opening/closing tray 21 is opened. Fig. 2B shows a state where the opening/closing body 20b is opened (in the open position).

The opening/closing tray 21 is supported pivotally about a pivot 21a by the opening/closing body 20b and is configured to be openable and closable with respect to the opening/closing main body 27 of the opening/closing body 20b. The pivot 21a is located at the lower end of the opening/closing tray 21 in a state where the opening/closing tray 21 is closed with respect to the opening/closing body 20b.

The opening/closing tray 21 is a manual feed tray member on which a plurality of recording media can be loaded in a state where the opening/closing tray 21 is opened with respect to the opening/closing main body 27. The opening/closing main body 27 of the opening/closing body 20b is provided with a paper feed port 26 that allows a recording medium placed on the opening/closing tray 21 to enter the apparatus body 20a. In a state where the opening/closing tray 21 is opened, a user can place the sheet S on the opening/closing tray 21 and feed the sheet S into the apparatus body 20a through the paper feed port 26.

### Image Forming Operation

Referring to FIG. 1, the image forming operation of the printer 1 will be described below. The control portion 3 of the printer 1 starts the image forming operation on the sheet S on the basis of an image signal received from an external host apparatus 400. For example, the external host apparatus 400 is a personal computer, an image reader, or a facsimile.

First, a charging voltage applied to the charging roller 62, and the photosensitive drum 61 is rotated. A laser beam corresponding to image information is emitted from the scanner 2 to the photosensitive drum 61, and the surface of the photosensitive drum 61 charged by the charging roller 62 is exposed. Thus, an electrostatic latent image corresponding to the image information is formed on the surface of the photosensitive drum 61.

The developing roller 71 carries toner. A developing voltage is applied to the developing roller 71, and the electrostatic latent image formed on the photosensitive drum 61 is developed by the toner supplied from the developing roller 71, thereby forming a toner image on the surface of the photosensitive drum 61. In the present embodiment, the developing roller 71 in contact with the photosensitive drum 61 develops the electrostatic latent image, but the developing roller 71 may be configured to develop the electrostatic latent image in the presence of a gap between the developing roller 71 and the photosensitive drum 61.

When a full-color image is formed, a toner image of each color is formed on each of the photosensitive drums 61.

In the present embodiment, the developing roller 71 is movable between the contact position where the developing roller 71 comes into contact with the photosensitive drum 61 and the separate position where the developing roller 71 is separated from the photosensitive drum 61. Specifically, a switching device (not shown) provided in the apparatus body 20a switches between a state where the developing roller 71 is located at the contact position and a state where the developing roller 71 is located at the separate position. Thus, in a state where the image forming operation is not performed, the developing roller 71 can be separated from the photosensitive drum 61.

In addition, the printer 1 can perform mono-color printing in a state where the developing roller 71 corresponding to the cartridge PK and the photosensitive drum 61 are in contact with each other while the developing rollers 71 corresponding to the respective cartridges PY, PM, and PC and the photosensitive drums 61 are separated from each other. In addition, the printer 1 can perform full-color printing in a state where the photosensitive drums 61 corresponding to the cartridges PY, PM, PC, and PK and the belt 41 are in contact with each other.

The toner images formed on the respective photoreceptor drums 61 are transferred onto the belt 41 by the primary transfer rollers 42, and are transported to a secondary transfer portion formed by the belt 41 and the secondary transfer roller 45.

In the sheet feeding portion 30, one of the sheets S loaded in the cassette 31 is separately fed by the first feed roller 32 at a predetermined timing. The sheet S fed from the sheet feeding portion 30 is conveyed to the secondary transfer portion and the fixing apparatus 80 through the first conveying path 10. Alternatively, as shown in FIG. 1, one of the sheets S loaded on the opening/closing tray 21 may be separately fed by a second feed roller 33 at a predetermined timing while the opening/closing tray 21 is opened. At this time, the sheet S is conveyed to the secondary transfer portion and the fixing apparatus 80 through the second conveying path 11.

In the secondary transfer portion, the toner image is transferred from the belt 41 to the sheet S. The toner not transferred to the sheet S is removed from the belt 41 by a cleaning blade (cleaning member) 43A provided in the cleaning portion 43.

The sheet S with the toner image transferred thereon in the secondary transfer portion is conveyed to the fixing apparatus 80. In the fixing apparatus 80, the sheet S is heated and pressurized by the fixing portion 81, so that the toner image is fixed to the sheet S.

Downstream of the fixing portion 81 in the conveying direction, a flapper 84 is provided as conveying path switching member. The flappers 84 can be switched by an actuator (not shown) between a first guide position indicated by a solid line in the drawing and a second guide position indicated by a broken line.

When printing is performed only on one side of the sheet S, the flapper 84 is held at the first guide position to guide the sheet S to the third conveying path 12. A discharge roller pair 6 is provided downstream of the third conveying path 12 in the conveying direction. The sheet S is discharged and loaded onto a loading tray 7 through a discharge port 88 by the discharge roller pair 6.

When printing is performed on both sides of the sheet S, the flapper 84 is held at the second guide position and guides the sheet S with an image fixed on one side to the fourth conveying path 13, which is a reversed conveying path. The sheet S having passed through the fourth conveying path 13 is first conveyed to a reversing roller pair 8. When the rear end of the sheet S is conveyed to the vicinity of the nip of the reversing roller pair 8, the flapper 84 is switched from the second guide position to the first guide position, and the rotation direction of the reversing roller pair 8 is reversed. Thus, the sheet S is conveyed to the fifth conveying path 14, which is a double-sided conveying path. Thereafter, the sheet S is conveyed again to the secondary transfer portion through the registration roller pair 4. After the toner image is transferred to the second side of the sheet S in the secondary transfer portion, the sheet S is heated and pressurized in the fixing portion 81, thereby fixing the toner image to the sheet S. In a state where the flapper 84 is held at the first guide position, the sheet S is discharged and loaded onto the loading tray 7 through the third conveying path 12.

### Jammed Sheet Handling Method

A method for handling a jammed sheet will be described below. The opening/closing body 20b rotates about the swing support shaft 22 to move to the open position shown in FIG. 2B and is opened at the position. At this time, the secondary transfer roller 45 and the airflow generator 90 or the like, which are attached to the opening/closing body 20b, move to the open position integrally with the opening/closing main body 27 of the opening/closing body 20b. That is, by moving the opening/closing body 20b to the open position, the periphery of the registration roller pair 4, the conveying path around the secondary transfer portion, and the fifth conveying path 14 are opened. Accordingly, in a case where the sheet S is jammed in the conveying path around the secondary transfer portion or the fifth conveying path 14, the jammed sheet can be collected and handled by opening the opening/closing body 20b.

### Cartridge Replacement Method

A method for replacing the cartridge P will be described below. In the present embodiment, the fixing apparatus 80 is configured to be movable upward (+ z direction) by elevating unit, which is not shown, from the position shown in Fig. 2B. By moving the fixing apparatus 80 upward, a space where the cartridge unit 50 moves from the inside to the outside of the apparatus body 20a is opened. That is, the user can grasp a tray handle 52 of the cartridge unit 50 and pull out the cartridge unit 50 from the apparatus body 20a in the front direction (+x direction) while the fixing apparatus 80 is moved upward.

The cartridge unit 50 is configured to be movable to a position where the cartridge PK located closest to the back side among the cartridges P is replaceable. The user can replace an old cartridge containing no toner with a new cartridge in a state where the cartridge unit 50 has been pulled out. Thereafter, the cartridge unit 50 is returned to the initial position, the fixing apparatus 80 is returned to the initial position, and the opening/closing body 20b is closed, so that the printer 1 can perform a recording operation (printing) again.

### Airflow Generator and Airflow

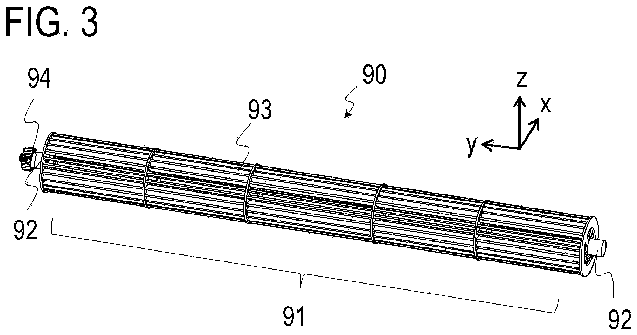

The configuration of the airflow generator 90 and an airflow generated by the airflow generator 90 will be described below. The airflow generator 90 according to the present embodiment is a cross-flow exhaust fan arranged in the longitudinal direction (rotation axis direction) parallel to the width direction (y direction, the rotation axis direction of the conveying roller). FIG. 3 is a perspective view showing the airflow generator 90 according to the first embodiment.

The airflow generator 90 is configured to be rotatable about the rotation axis parallel to the width direction (y direction). The airflow generator 90 is airflow generating unit (air blowing unit) that generates an airflow in a direction along the rotation direction by rotation and includes an air blowing portion 91 that is provided with a plurality of blades 93 for blowing air, and a rotation shaft 92 that protrudes in the width direction from both ends of the air blowing portion 91 in the width direction. The blades 93 extend along the rotation axis direction of the airflow generator 90 and are provided in a plurality along the rotation direction. The blades 93 move and blow air as the rotation shaft 92 rotates.

The airflow generator 90 is formed such that the length in the rotation axis direction is larger than the diameter (the length in a radial direction) and extends in the rotation axis direction. The blades 93 extend from one end to the other end of the airflow generator 90 in the rotation axis direction. Specifically, the length of the air blowing portion 91 (blade 93) in the rotation axis direction is equal to or larger than the width of the largest sheet having the maximum width (length in the y direction) among recording media conveyed to the conveying path in the printer 1. With such a configuration, air can be blown into the sheet conveying path in the entire sheet width direction.

Such a cross-flow exhaust fan is characterized in that air can be uniformly and efficiently blown to a wide object to be cooled, thereby preventing lateral unevenness in cooling in the width direction. Furthermore, since the total area of the blades 93 can be increased by extending the blades 93 in the width direction, a large amount of air can be secured even in the case of a low rotation speed. That is, the airflow generator 90 does not need to be rotated fast, thereby reducing the operating sound.

Note that the length of the airflow generator 90 in the rotation axis direction does not necessarily have to be equal to or larger than the width of the largest sheet. However, from the viewpoint of suppressing uneven cooling, it is preferable that at least both ends of the airflow generator 90 (air blowing portion 91) in the rotation axis direction are located outside of the smallest sheet having the minimum width among recording media conveyed to the conveying path in the printer 1.

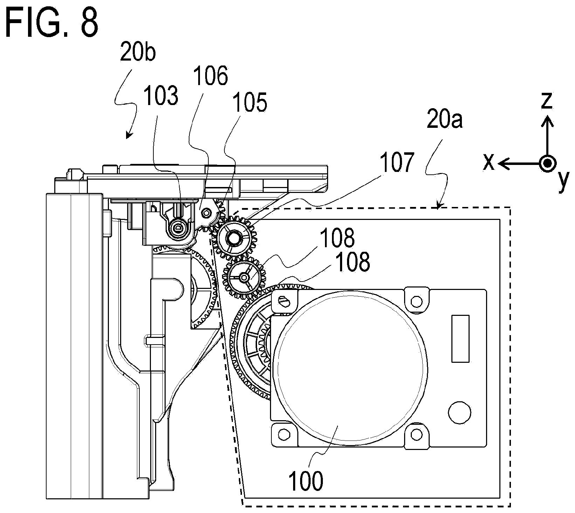

A drive gear 94 is provided at one end of the rotation shaft 92 in the width direction. The apparatus body 20a is provided with a motor 100 (shown in FIG. 8) as a drive source configured to drive the airflow generator 90. The drive gear 94 is a gear for receiving the driving force of the motor 100 provided in the apparatus body 20a and rotating the airflow generator 90. Furthermore, the airflow generator 90 is supported in a state where the rotation shaft 92 at both ends is rotatable by the opening/closing main body 27 of the opening/closing body 20b. For example, the opening/closing body 20b can be provided with a bearing member, and the rotation shaft 92 can be rotatably held by the bearing member.

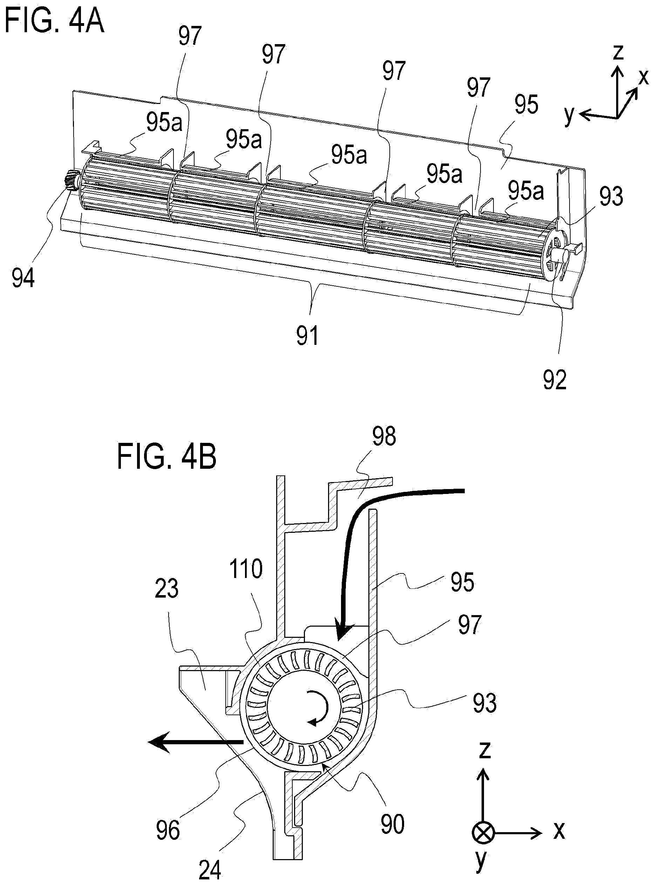

FIGS. 4A and 4B are explanatory drawings of the airflow generator 90 according to the first embodiment. Fig. 4A is a perspective view showing the airflow generator 90 and a cover member 95. Fig. 4B is a cross-sectional view showing the airflow generator 90 and a housing portion 210 that accommodates the airflow generator 90, and showing a cross section orthogonal to the width direction. The airflow generator 90 is covered with a cover portion (housing) 110 composed of a door member 23 and the cover member 95. The door member 23 and the cover member 95 are attached to the opening/closing main body 27 of the opening/closing body 20b, and the airflow generator 90 moves with the opening/closing body 20b in conjunction with the opening/closing operation of the opening/closing body 20b. The positional relationship between the members will be described below with respect to the state where the opening/closing body 20b is in the closed position.

The airflow generator 90 receives the driving force of the motor 100 and rotates clockwise in FIG. 4B. The blade 93 is shaped in cross section such that the central portion in the radial direction gradually protrudes toward the upstream side in the rotation direction.

The opening/closing body 20b includes a storage portion 110 in which the airflow generator 90 is stored, and a cover portion that covers a part of the airflow generator 90 stored in the storage portion 110. The storage portion 110 is a space formed by the door member 23 and the cover member 95. The cover portion is composed of the door member 23 and the cover member 95. The cover member 95 is provided with upper cover portions 95a covering the upper part of the air blowing portion 91 together with the door member 23 at a position facing the air blowing portion 91 above the air blowing portion 91. The cover member 95 is provided with the plurality of upper cover portions 95a spaced at certain intervals in the width direction. The storage portion 110 and the airflow generator 90 move integrally with the opening/closing body 20b.

The door member 23 is a member that constitutes a part of the opening/closing body 20b and has a conveying guide 24 forming a fifth conveying path (double-sided conveying path) 14 in the present embodiment. Furthermore, the door member 23 serves as a part of the storage portion 110 covering the airflow generator 90. The cover member 95 is attached to the door member 23 and serves as a part of the storage portion 110 covering the airflow generator 90.

The opening/closing body 20b has a first suction port 97 and a second suction port 98 as passages of air sucked into the airflow generator 90, and an exhaustion port 96 as a passage of air from the airflow generator 90. The first suction port 97 and the exhaustion port 96 communicate with the storage portion 110. The second suction port 98 communicates with the outside of the body housing 20. In other words, as shown in FIG. 4B, the door member 23 and the cover member 95 form an air passage in the opening/closing body 20b, the passage having the first suction port 97 and the second suction port 98.

When the airflow generator 90 is rotationally driven in a state where the opening/closing body 20b is closed with respect to the apparatus body 20a, air is drawn into the storage portion 110 from the outside of the body housing 20 through the second suction port 98 and the first suction port 97. The air drawn into the storage portion 110 is exhausted from the exhaustion port 96 into the apparatus body 20a. The airflow generator 90 rotates to generate an airflow in a direction from the second suction port 98 to the first suction port 97 and from the first suction port 97 to the exhaustion port 96.

The first suction port 97 is provided immediately above the airflow generator 90 and opens upward. The first suction port 97 is an suction port formed between the upper cover portions 95a adjacent to each other in the width direction. Fig. 4B is a cross-sectional view of a cross section passing through the first suction port 97. The second suction port 98 is an suction port provided above the first suction port 97 and opens in the front direction. The second suction port 98 is formed by the door member 23 and the cover member 95.

The exhaustion port 96 is an air blowing port that opens in the downward direction and the rearward direction and communicates with the conveying path of the apparatus body 20a. The exhaustion port 96 is formed by cutting a part of the door member 23 and is located below the first suction port 97. In this way, the storage portion 110 is provided to cover the airflow generator 90. Both ends of the airflow generator 90 in the rotation axis direction and a part of the airflow generator 90 in the circumferential direction are covered with the door member 23 and the cover member 95. The door member 23 and the cover member 95 are partially cut to form openings serving as the first suction port 97 and the exhaustion port 96 that communicate with the storage portion 110.

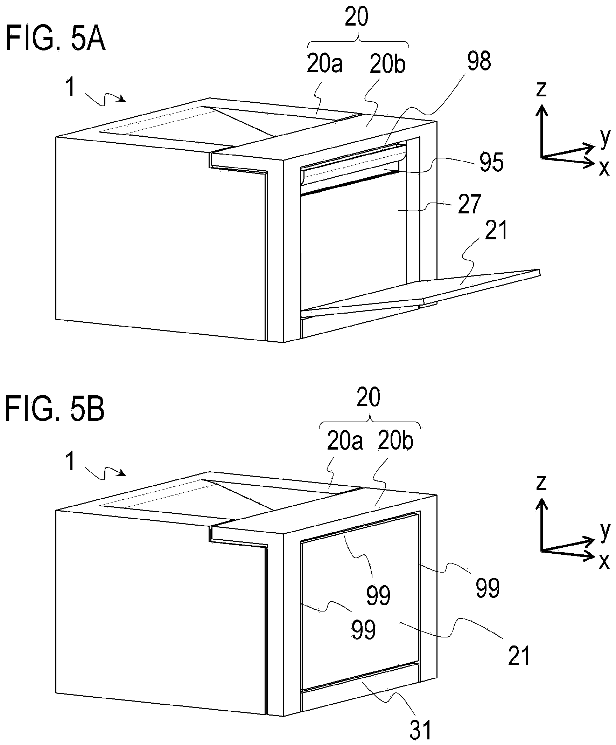

FIGS. 5A and 5B are perspective views of the printer 1 viewed from the front side. FIG. 5A shows a state where the opening/closing tray 21 is opened. FIG. 5B shows a state where the opening/closing tray 21 is closed.

As shown in FIG. 5A, in a state where the opening/closing tray 21 is opened, the cover member 95 and the second suction port 98 of the storage portion 110 are exposed. Therefore, the airflow generator 90 can suck outside air through the second suction port 98.

As shown in FIG. 5B, in a state where the opening/closing tray 21 is closed, the opening/closing tray 21 covers the second suction port 98. Furthermore, a clearance is formed between the opening/closing tray 21 and the opening/closing body 20b in a state where the opening/closing tray 21 is closed. The clearance functions as a third suction port 99 communicating with the second suction port 98. In the present embodiment, the third suction port 99 is formed on the upper side of the opening/closing tray 21 and on both sides in the width direction. Outside air passes through the third suction port 99, the second suction port 98, and the first suction port 97 in this order and is drawn into the airflow generator 90.

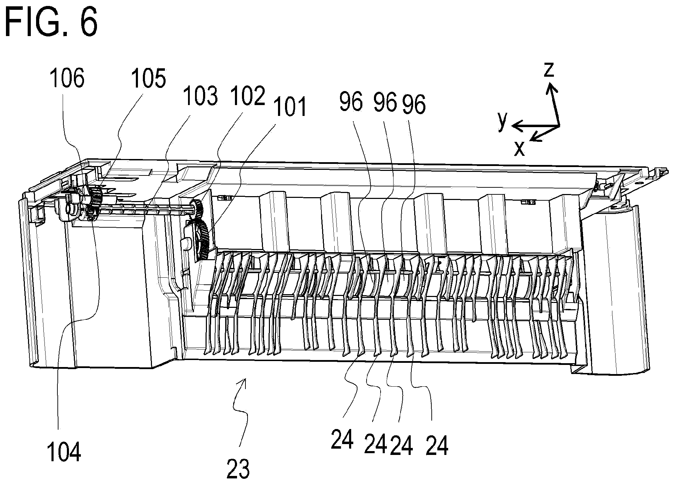

FIG. 6 is a perspective view of a part of the door member 23, which is a constituent element of the opening/closing body 20b, from the fifth conveying path 14 (inside of the apparatus body 20a). The door member 23 is provided with the plurality of conveying guides 24 arranged in the width direction (y direction). In addition, the exhaustion port 96 is provided between the conveying guides 24. In the present embodiment, the plurality of exhaust ports 96 is provided along the width direction.

Although not shown in FIG. 6, the air blowing portion 91 of the airflow generator 90 is provided on the front side of the exhaustion port 96 (the far side of FIG. 6). The conveying guide 24 is arranged and configured such that the sheet S being conveyed on the fifth conveying path 14 is not caught by the air blowing portion 91 to cause a jam.

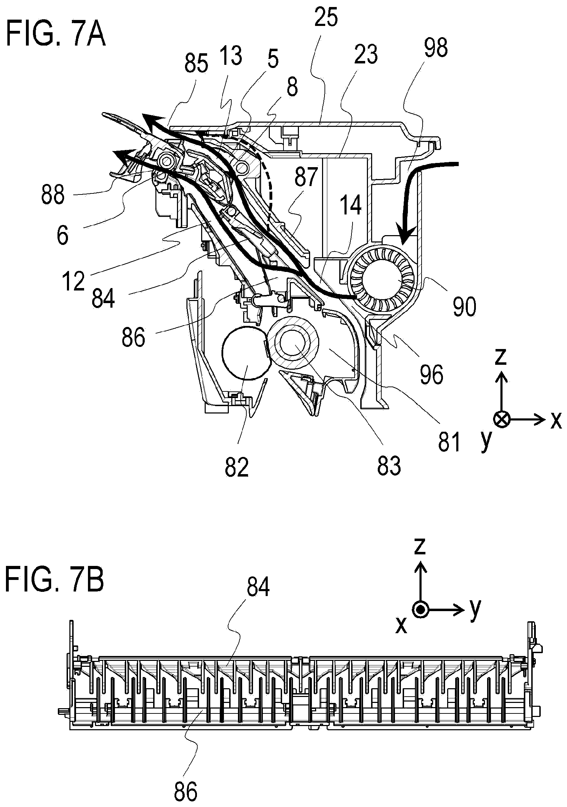

FIGS. 7A and 7B are explanatory drawings of a flow of air (airflow) blown from the exhaustion port 96. Air blown from the exhaustion port 96 passes through the conveying path in the body housing 20 and is exhausted to the outside of the printer 1 (outside of the body housing 20).

FIG. 7A is a cross-sectional view showing the periphery of the airflow generator 90, the fixing portion 81, and the discharge reversal portion 5, and showing a cross section orthogonal to the width direction. In FIG. 7A, thick arrows indicate the flow of intake air to the airflow generator 90 and the flow of exhaust air from the airflow generator 90 to the outside of the printer.

FIG. 7B shows the flapper 84 and a branch conveying guide 86 that are viewed from the front side (the right side of FIG. 7A). The paper passage ribs of the flapper 84 and the branch conveying guide 86 are shaped like comb teeth. The paper passage ribs of the flapper 84 and the branch conveying guide 86 are arranged such that the ribs partially overlap each other when viewed in the width direction and are staggered in the width direction. A gap is formed between the paper passage ribs to allow passage of air.

The exhaustion port 96 formed in the opening/closing body 20b communicates with the fifth conveying path 14. The fifth conveying path 14 is a portion of the conveying path formed for the sheet S in the body housing 20, the portion being located downstream of the fixing apparatus 80 in the conveying direction. The fifth conveying path 14 is a double-sided conveying path where a recording medium passes with an image fixed on one side through the fixing apparatus 80.

Air blown from the exhaustion port 96 by the airflow generator 90 is exhausted from a reversing exhaustion port 85, which is provided at the tip of the reversing roller pair 8, via the fifth conveying path 14 and the fourth conveying path 13. Moreover, air blown from the exhaustion port 96 by the airflow generator 90 passes through the gap between the branch conveying guide 86 and the flapper 84 and is exhausted from the discharge port 88, at which the discharge roller pair 6 is provided, via the third conveying path 12. The discharge roller pair 6, the discharge port 88, the reversing roller pair 8, and the reversing exhaustion port 85 are all located above the airflow generator 90 in a state where the opening/closing body 20b is in the closed position.

Since the flapper 84 and the branch conveying guide 86 are configured to form a gap between the paper passage ribs, air blown from the airflow generator 90 may split into the fourth conveying path 13 and the third conveying path 12 regardless of the position of the flapper 84. That is, in the first embodiment, an airflow is sent by the airflow generator 90 to the third conveying path 12, the fourth conveying path 13, and the fifth conveying path 14, which are conveying paths downstream of the fixing portion 81 in the conveying direction.

Since the airflow generator 90 is attached to the opening/closing body 20b provided at the front-side end of the printer 1, the airflow generator 90 is disposed near the outside of the apparatus body 20a when the opening/closing body 20b is in the closed position. Furthermore, the fixing portion 81, the third conveying path 12, the fourth conveying path 13, and the fifth conveying path 14 are also disposed at the front-side end of the apparatus body 20a. This can shorten the distance from the outside of the printer to the airflow generator 90 and the distance from the airflow generator 90 to each conveying path. Thus, the warming of air in the printer can be suppressed and fresh air sucked from the outside of the printer can be passed to each conveying path. Accordingly, fresh air sucked from the outside of the printer can be passed to the conveying path exposed to steam generated from the sheet S heated by the fixing portion 81, and upsizing of the printer 1 can be suppressed.

Note that a hole may be formed as a vent on the paper passage face of a reversing portion conveying guide 87 and an exhaust path (broken line arrow in FIG. 7A), through which air is exhausted from the reversing exhaustion port 85, may be provided through the hole. Also, a configuration may be adopted in which a hole is formed as an exhaustion port in a place located above the reversing portion conveying guide 87 with respect to the door member 23 and a top cover 25 and air is exhausted from the hole.

### Method for Driving Airflow Generator

A method for driving the airflow generator 90 will be described below. FIG. 8 is an explanatory drawing of the drive transmission mechanism of the airflow generator 90, showing the drive transmission mechanism viewed in the width direction. The drive transmission mechanism is disposed on one end near the drive gear 94 provided in the width direction.

As described above, the drive gear 94 is provided on one of the rotation shafts 92 of the airflow generator 90 (see FIG. 3). As shown in FIGS. 6 and 8, the door member 23 of the opening/closing body 20b is provided with, for example, a plurality of gears constituting the drive transmission mechanism. Specifically, the door member 23 is provided with a first idler gear 101, a second idler gear 102, a connecting shaft 103, a pivoting support gear 104, a pivoting gear 105, and a pivoting holder 106.

The first idler gear 101 is engaged with the drive gear 94 of the airflow generator 90 and the second idler gear 102. The second idler gear is attached to one axial end of the connecting shaft 103. The connecting shaft 103 is a shaft extending in the width direction (y direction), and the pivoting support gear 104 is attached to the other end. In other words, the second idler gear 102, the connecting shaft 103, and the pivoting support gear 104 rotate integrally. The pivoting support gear 104 is configured to be engaged with the pivoting gear 105 supported by the pivoting holder 106.

The pivoting holder 106 and the pivoting gear 105 are supported so as to pivot about the rotation axis of the pivoting support gear 104 (connecting shaft 103). That is, the direction of the pivot axis of the pivoting gear 105 is parallel to the direction of the rotation axis. Moreover, the pivoting holder 106 is urged clockwise in FIG. 8 by an urging member (elastic member), which is not shown.

Attached to the apparatus body 20a are an interface gear 107 and a plurality of idler gears 108 that constitute the drive transmission mechanism, and the motor 100 configured to drive the airflow generator 90. The interface gear 107 is connected to the motor 100 via the plurality of idler gears 108, so that the driving force of the motor 100 is transmitted.

When the opening/closing body 20b is in the closed position, the interface gear 107 (first connecting gear) provided in the apparatus body 20a engages with the pivoting gear 105 (second connecting gear) provided in the opening/closing body 20b. The engagement between the pivoting gear 105 and the interface gear 107 brings the drive transmission mechanism to a drive transmission state in which the driving force of the motor 100 can be transmitted to the airflow generator 90. Through such a drive transmission mechanism, the motor 100 rotates the airflow generator 90.

When the opening/closing body 20b is in the open position, the interface gear 107 and the pivoting gear 105 are separated from each other. Thereafter, the interface gear 107 and the pivoting gear 105 are disconnected, so that the drive transmission mechanism is placed in a non-drive transmission state where the driving force of the motor 100 is not transmitted to the airflow generator 90.

Various gears constituting the drive transmission mechanism, for example, the pivoting gear 105 provided in the opening/closing body 20b is located closer to the second end 20d (distal end) than to the first end 20c (proximal end) of the opening/closing body 20b in a direction orthogonal to the pivot axis of the opening/closing body 20b. When the opening/closing body 20b is in the closed position, the interface gear 107, the plurality of idler gears 108, and the motor 100 that are provided in the apparatus body 20a are located closer to the second end 20d than to the first end 20c of the opening/closing body 20b. In this way, the motor 100 and the drive transmission mechanism are disposed near the second end 20d close to the airflow generator 90, so that the drive transmission mechanism can be configured with a short length.

As described above, the drive transmission mechanism for transmitting the driving force of the motor 100 to the airflow generator 90 switches between the drive transmission state and the non-driven transmission state in conjunction with the opening/closing operation of the opening/closing body 20b. That is, the pivoting gear 105 is separated from the interface gear 107 in conjunction with the opening operation of the opening/closing body 20b to the apparatus body 20a, and the distance between the airflow generator 90 and the motor 100 increases. In contrast, in conjunction with the closing operation of the opening/closing body 20b to the apparatus body 20a, the pivoting gear 105 is brought close to the interface gear 107 and the distance between the airflow generator 90 and the motor 100 decreases.

Furthermore, in the first embodiment, the pivoting gear 105 is supported by the opening/closing body 20b so that the pivoting gear 105 is pivotable. Accordingly, even if the relative positions of the apparatus body 20a and the opening/closing body 20b are slightly displaced from the design position by a component tolerance or the like, the distance between the axes of the pivoting gear 105 and the interface gear 107 can be secured to reliably transmit driving. Instead of the pivoting gear 105 provided in the opening/closing body 20b, the interface gear 107 provided in the apparatus body 20a may be configured to pivot.

A driving train (not shown) different from a driving train for driving the airflow generator 90 is connected to the motor 100 and is also used as a driving source for rotationally driving the pressurizing portion (pressure roller) 83 of the fixing apparatus 80. Therefore, when the pressurizing portion 83 is rotated during printing or before and after printing, the airflow generator 90 rotates in conjunction with the rotation, and fresh air is fed to the conveying path downstream of the fixing portion 81.

As described above, according to the configuration of the first embodiment, fresh air outside the printer can be fed to the conveying path in the printer while suppressing upsizing of the printer 1. Furthermore, an air-blowing rotating member extending in the width direction is used as the airflow generator 90, thereby uniformly feeding fresh air in the width direction. In addition, since the motor 100, which is the driving source of the airflow generator 90, is attached to the apparatus body 20a and is used as the driving source of another driving portion, the number of driving sources can be reduced to suppress upsizing and cost increase of the printer 1.

### Modification Example

The embodiment of the present invention has been illustrated. The shapes and relative arrangements and the like of the components described in the embodiment may be modified as appropriate depending on the configuration and various conditions of the apparatus to which the present invention is applied, and are not intended to limit the scope of the present invention. A modification example of the first embodiment will be described below.

In the first embodiment, the apparatus body 20a is provided with discharge roller pair 6 and the reversing roller pair 8 but may be provided with no reversing roller pair 8. In such a configuration, the sheet S can be conveyed to the fifth conveying path 14 (double-sided conveying path) by rotating the discharge roller pair 6 in the normal direction and in the reverse direction.

Another configuration may be designed such that wind from the airflow generator 90 is partially used for cooling an object to be cooled (e.g., an electrical component) other than the conveying path of the sheet S. Furthermore, the motor 100 is used as a driving source for driving the fixing apparatus 80 (pressurizing portion 83) in the first embodiment, but another configuration may be adopted to drive the airflow generator 90 by driving unit for driving drive portions other than the fixing apparatus 80. The drive portions other than the fixing apparatus 80 include, for example, a roller (rotating member) such as a conveying roller that comes into contact with the sheet S.

### Second Embodiment

A second embodiment according to the present invention will be described below. The second embodiment differs from the first embodiment in the configuration of an airflow generator. Hereinafter, in the configuration of the second embodiment, only differences from the configuration of the first embodiment will be described. In the second embodiment, the same components as those in the first embodiment will be denoted with the same reference numerals, and descriptions thereof will be omitted.

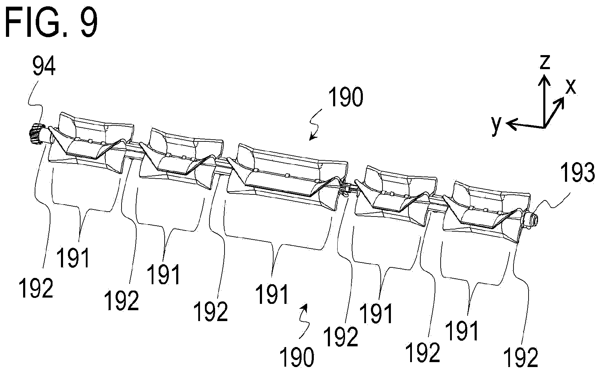

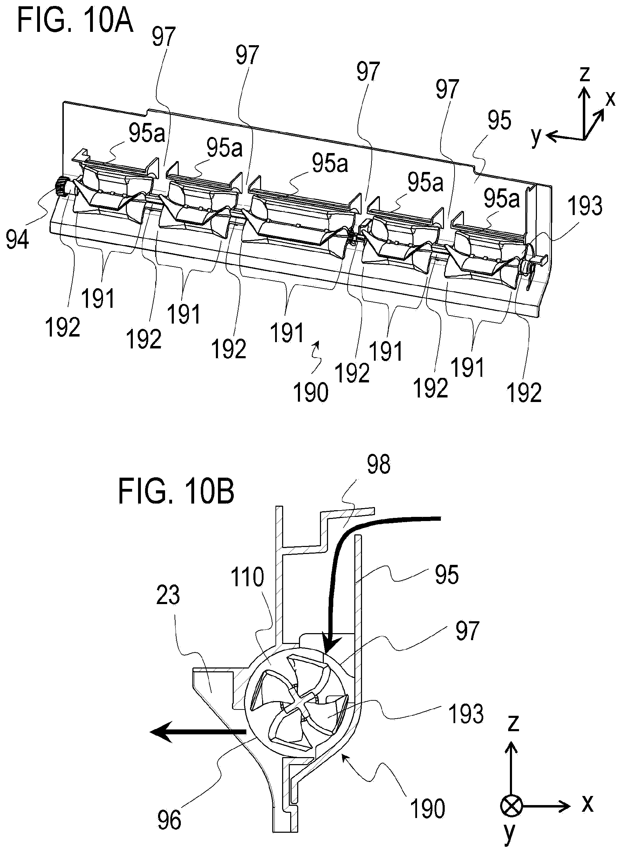

FIG. 9 is a perspective view of an airflow generator 190 according to the second embodiment. FIGS. 10A and 10B are explanatory drawings of the airflow generator 190 according to the second embodiment. FIG. 10A is a perspective view showing the airflow generator 190 and a cover member 95. FIG. 10B is a cross-sectional view of the airflow generator 190 and a storage portion 110 that accommodates the airflow generator 190, showing a cross section orthogonal to the width direction.

As shown in FIG. 10A, the airflow generator 190 includes a rotation shaft 192, which is the center of rotation of the airflow generator 190, over the entire area in the longitudinal direction (width direction). An air blowing portion 191 of the airflow generator 190 is composed of four blades 193 extending substantially radially from the rotation shaft 192. The five air blowing portions 191 are provided along the rotation axis direction.

A drive gear 94 similar to that of the first embodiment is provided on one end of the rotation shaft 192. That is, as in the first embodiment, the airflow generator 190 is connected to the motor 100 provided in the apparatus body 20a via the drive gear 94 and the drive transmission mechanism and is rotated by the driving force of the motor 100.

The storage portion 110 that accommodates the airflow generator 190 is composed of a door member 23 and a cover member 95. The cover member 95 according to the second embodiment is provided with upper cover portions 95a covering the upper part of the air blowing portion 191 together with the door member 23 at a position facing the air blowing portion 191 above the air blowing portion 191. A first suction port 97 is formed between the upper cover portions 95a in the width direction. FIG. 10B is a cross-sectional view of a cross section passing through the first suction port 97.

The blades 193 are shaped like turbo fan blades. Specifically, the blades 193 are spirally formed such that one end of the blade 193 in the width direction (a portion near the first suction port 97) is located downstream of the central portion in the rotation direction. The blades 193 having blade shapes close to propeller fans can accelerate air suction from the first suction port 97 in the width direction, thereby blowing air with a higher pressure. Furthermore, the shape of the airflow generator 190 in the present embodiment can be formed as one component by mold injection molding, except for the drive gear 94.

Note that the shape and number of blades 193 and the length and number of air blowing portions 191 in the width direction are not limited to the shapes shown in the present embodiment, and may be modified as appropriate. Also, the airflow generator 190 does not necessarily have to be formed as a single part and may be formed by connecting the several air blowing portions 191.

As described above, according to the configuration of the second embodiment, the airflow generator 190 has a shape that can be formed by mold injection molding. This can reduce the cost of the airflow generator while obtaining the same effects as those of the first embodiment.

### Third Embodiment

A third embodiment according to the present invention will be described below. The third embodiment is different from the first embodiment in that a driving source for an airflow generator is dedicated to the airflow generator. Hereinafter, in the configuration of the third embodiment, only differences from the configuration of the first embodiment will be described. In the third embodiment, the same components as those in the first embodiment will be denoted with the same reference numerals, and descriptions thereof will be omitted.

In the first embodiment, the motor 100 for driving the airflow generator 90 is also used as driving unit for drive portions (e.g., a pressure roller, a discharge roller pair, a reversing roller pair) other than the airflow generator 90, whereas in the present embodiment, a motor 100 is provided as driving unit dedicated to drive only an airflow generator 90. Furthermore, in the third embodiment, a printer 1 includes driving control unit (not shown) for controlling the driving of the motor 100. Note that the configuration of the airflow generator 90 and a drive transmission mechanism connecting the airflow generator 90 and the motor 100 are similar to those of the first embodiment.

The dedicated motor 100 is assigned to the airflow generator 90, thereby providing a degree of freedom in drive control of the airflow generator 90. For example, on the basis of the detection result (temperature/humidity information) of the environment sensor 9, it is detected that the environment where the printer 1 is installed is a low humidity environment where steam is less likely to be generated during the fixing operation by the fixing portion 81. In this case, the number of rotations of the airflow generator 90 can be set high. This can suppress power consumption and reduce operation noise generated when rotating the airflow generator 90. Conversely, when it is detected that the printer 1 is in a high humidity environment where steam is likely to be generated during a fixing operation by the fixing portion 81, the number of rotations of the airflow generator 90 is set high to increase the air volume, thereby further preventing water droplets from sticking to the sheet conveying path.

Furthermore, according to the configuration of the present embodiment, only the airflow generator 90 is driven before and after printing and air is blown to the sheet conveying path, allowing water droplets to blow out of the sheet conveying path of the sheet S. At that time, the pressurizing portion 83 is not driven, eliminating the need for heating the heating portion 82. This can suppress power consumption and increase the life of the fixing apparatus 80.

### Modification Example

In a case where the motor 100 is provided as a dedicated drive source of the airflow generator 90 as in the third embodiment, the motor 100 may be provided in the opening/closing body 20b instead of the apparatus body 20a. In such a configuration, for example, the motor 100 may be disposed at the position of the first idler gear 101 (see FIG. 6) and a drive transmission mechanism connecting the drive gear 94 and the motor 100 may be attached to the opening/closing body 20b. Power for driving the motor 100 can be supplied from the apparatus body 20a to the opening/closing body 20b by connecting a bundle of wires, which extend from the motor 100, to an electrical portion (not shown) in the apparatus body 20a via the vicinity of the swing support shaft 22. According to such a configuration, the configuration of the drive transmission mechanism connecting the motor 100 and the airflow generator 90 can be simplified. From the viewpoint of omitting the wiring member, it is more preferable to provide the motor 100 in the apparatus body 20a to transmit a driving force from the apparatus body 20a to the opening/closing body 20b.

Note that the configurations of the foregoing embodiments can be combined as appropriate.

Various embodiments have been described in detail above but it will be understood that the present disclosure is not limited to these embodiments and encompasses all modifications, variants, alternatives and equivalents falling within the scope of the appended claims.

## Claims

1. An image forming apparatus configured to form an image on a recording medium, the image forming apparatus comprising:
an airflow generator;
a motor configured to drive the airflow generator;
a body housing including an apparatus body that supports the motor, and an opening/closing body that is openable and closable with respect to the apparatus body and supports the airflow generator, the opening/closing body including: a storage portion that accommodates the airflow generator, a cover portion covering a part of the airflow generator stored in the storage portion, an suction port communicating with the storage portion, and an exhaustion port communicating with the storage portion;
wherein in a case where the air flow generator is driven by the motor in a state where the opening/closing body is closed with respect to the apparatus body, air is drawn into the storage portion from outside of the body housing through the suction port, and the air is exhausted from the exhaustion port into the body housing.

2. The image forming apparatus according to claim 1, further comprising:
a drive transmission mechanism configured to transmit a driving force of the motor to the airflow generator, the drive transmission mechanism being placed in a drive transmission state where the driving force is transmitted in a state where the opening/closing body is closed with respect to the apparatus body, the drive transmission mechanism being placed in a non-drive transmission state in which the driving force is not transmitted in a state where the opening/closing body is opened with respect to the apparatus body.

3. The image forming apparatus according to claim 2,
wherein the drive transmission mechanism includes a first connecting gear provided in the apparatus body and a second connecting gear provided in the opening/closing body, and
wherein in a case where the drive transmission mechanism is in the drive transmission state, the first connecting gear and the second connecting gear are engaged with each other, and in a case where the drive transmission mechanism is in the non-drive transmission state, the first connecting gear and the second connecting gear are separated from each other.

4. The image forming apparatus according to any one of claims 1 to 3,
wherein a distance between the airflow generator and the motor increases in conjunction with an opening operation of the opening/closing body with respect to the apparatus body.

5. The image forming apparatus according to any one of claims 1 to 4,
wherein the opening/closing body includes an opening/closing main body, an opening/closing tray that is openable and closable with respect to the opening/closing main body and is capable of loading a plurality of recording media in a state where the tray is opened with respect to the opening/closing body, and a paper feed port that allows a recording medium loaded on the opening/closing tray to enter the apparatus body.

6. The image forming apparatus according to claim 5,
wherein in a case where the suction port serves as a first suction port, the opening/closing body includes the first suction port and a second suction port communicating with the first suction port, and
wherein the opening/closing tray covers the second suction port in a state where the opening/closing tray is closed with respect to the opening/closing main body.

7. The image forming apparatus according to claim 6,
wherein in a state where the opening/closing body is closed with respect to the apparatus body, the second suction port is located above the first suction port, and the exhaustion port is located below the first suction port.

8. The image forming apparatus according to claim 7,
wherein in a state where the opening/closing tray is closed with respect to the opening/closing main body, the opening/closing tray covers the second suction port, and a third suction port communicating with the second suction port is formed between the opening/closing tray and the opening/closing main body.

9. The image forming apparatus according to any one of claims 1 to 8,
wherein a conveying path through which a recording medium is conveyed is formed in the apparatus body, and the exhaustion port communicates with the conveying path.

10. The image forming apparatus according to claim 9, further comprising:
a heating portion configured to heat a recording medium,
wherein the exhaustion port communicates with a portion of the conveying path on a downstream side of the heating portion in a conveying direction of the recording medium.

11. The image forming apparatus according to claim 10,
wherein in a state where the opening/closing body is closed with respect to the apparatus body, the airflow generator is located above the heating portion.

12. The image forming apparatus according to any one of claims 9 to 11,
wherein the apparatus body includes a discharge port in which a recording medium with a formed image is discharged to outside, the discharge port being located above the airflow generator in a state where the opening/closing body is closed.

13. The image forming apparatus according to any one of claims 9 to 12, further comprising:
a conveying roller that is provided in the apparatus body and configured to rotate about a rotation axis to convey the recording medium,
wherein both ends of the airflow generator in a rotation axis direction along the rotation axis of the airflow generator are located outside a smallest sheet having a minimum width among recording media conveyed to the conveying path in the rotation axis direction.

14. The image forming apparatus according to any one of claims 1 to 13,
wherein the opening/closing body is configured to pivot relative to the apparatus body about a pivoting shaft, the opening/closing body having a first end and a second end opposite to the first end in a direction orthogonal to a pivot axis of the opening/closing body, the pivoting shaft is closer to the first end than to the second end, and the airflow generator is closer to the second end than to the first end.

15. The image forming apparatus according to any one of claims 1 to 14, further comprising:
a drive portion configured to driven by the motor,
wherein the drive portion is a roller configured to come into contact with the recording medium.
